# FASCICULE DE BREVET EUROPEEN

(11) **EP 2 351 342 B1**
(45) Date de publication et mention de la délivrance du brevet: **10.08.2016**
(21) Numéro de dépôt: 09756016.3
(22) Date de dépôt: 13.10.2009
(51) Int. Cl.: H04M 3/22

(54) **QUALITÉ DE TRANSMISSION DANS UN SYSTÈME DE COMMUNICATION**
ÜBERTRAGUNGSQUALITÄT IN KOMMUNIKATIONSSYSTEM
TRANSMISSION QUALITY IN A COMMUNICATION SYSTEM

(30) Priorité: 20.10.2008 FR 0857123
(43) Date de publication de la demande: 03.08.2011
(73) Titulaire: Orange, 75015 Paris (FR)
(72) Inventeur: FAURE, Julien, F-22300 Ploubezre (FR); WIPLIEZ, Christian, F-22300 Lannion (FR)
(74) Mandataire: Cabinet Plasseraud
(86) Numéro de dépôt international: PCT/FR2009/051949
(87) Numéro de publication internationale: WO 2010/046580

(56) Documents cités:
- GB-A- 2 424 792
- US-A1- 2005 043 950
- US-A1- 2006 093 094

## Description

La présente invention concerne l'estimation de la qualité de transmission d'un système de communication, grâce à un dispositif générant un signal à cet effet.

L'invention s'applique notamment à l'estimation de la qualité de transmission des réseaux de téléphonie et de transmission de voix par paquets, grâce à la génération de signaux analogiques audio de qualité ajustable, pouvant être supérieure au minimum requis sur chaque réseau.

Dans le domaine de l'émission de messages audio dans un réseau de communication, il est connu d'employer, notamment en téléphonie, des répondeurs basés sur une interface téléphonique couplée à un système de reproduction sonore par association d'une mémoire, numérique ou analogique, et d'un système, comme un micro contrôleur ou une machine à état, qui active la lecture de la mémoire et la reproduction sonore vers l'interface de ligne téléphonique.

La reproduction sonore peut servir à notifier l'absence de l'appelé, demander un dépôt de message ou de manière plus large, dans un des cas d'application de l'invention, délivrer un message sonore vers un équipement de test du réseau pour un test de qualité vocale.

Certains circuits spécifiques dédiés à la réalisation de ces répondeurs dits enregistreurs téléphoniques sont déjà proposés sur le marché. Cependant les répondeurs actuels présentent notamment les inconvénients majeurs ci-après.

Les messages sonores pouvant être stockés ont une qualité médiocre, les fréquences d'échantillonnage étant habituellement limitées à 8000 ou- à 16000 Hz, avec une résolution limitée à 4, 8 ou 16 bits et un pré-encodage obligatoirement effectué avec le codage disponible le plus simple sur le répondeur, le plus souvent de type G711.

Par ailleurs, les codecs intégrés dans certains répondeurs, pour répondre au problème de mémoire lié au stockage des messages sonores, font l'objet de licences limitant la flexibilité de leur utilisation.

En outre, les interfaces disponibles pour transférer les messages d'accueil dans les répondeurs actuels sont limitées. Pour certains modèles haut de gamme, les téléchargements directs sur l'appareil sont possibles, mais ils imposent alors des contraintes de compression audio avant transfert qui réduisent au final la qualité du message.

Outre leur vocation première de notification de l'absence de l'appelé, une application possible de ces répondeurs concerne le test de qualité vocale d'un réseau de communication, le répondeur servant alors à délivrer un message sonore vers un équipement de test du réseau pour en tester la qualité vocale.

L'utilisation d'une unité de réponse vocale dans le cadre de la mesure de qualité d'un réseau téléphonique est connue, comme divulgué par le brevet américain US 7,194,068. Le système présenté dans ce brevet utilise un testeur de qualité vocal rappelant une unité de réponse vocale afin de tester le réseau. Un autre exemple se trouve dans US 2006/093094.

La technique employée dans ce document est cependant lourde à mettre en oeuvre, car elle nécessite une étape préalable de synchronisation entre le testeur et l'unité de réponse, avant que le testeur n'envoie un signal vocal à l'unité de réponse, afin que celle-ci le lui retourne par la suite, pour comparer le signal vocal initial avec sa version transmise. Le signal utilisé fait donc l'aller-retour entre le testeur et l'unité de réponse, et s'en trouve donc fortement dégradé.

Un autre désavantage de cette technique est que le signal de test reçu est tellement dégradé qu'il ne permet pas de tester la qualité du réseau de façon optimale. Par exemple, avec cette technique, le signal test reçu ne remplit plus les contraintes liées à la recommandation P862.3 pour l'usage d'un algorithme d'évaluation perceptuelle de la qualité vocale (« Perceptual Evaluation of Speech Quality », encore appelé PESQ).

La présente invention vient améliorer la situation. Elle propose à cet effet, tout d'abord, un dispositif de génération d'un signal pour estimer la qualité de transmission dans un système de communication, comportant :
- un moyen de stockage numérique d'au moins un fichier numérique,
- un moyen de conversion adapté pour, en réponse à une demande de test de qualité du système de communication, convertir le fichier numérique en un signal analogique à transmettre au travers du système de communication, ladite conversion étant menée en appliquant au moins un paramètre fonction d'au moins un paramètre propre au fichier numérique.

Il est ainsi possible de générer un signal analogique de façon flexible, adapté à n'importe quel type de fichier numérique stocké en mémoire ainsi qu'éventuellement au type de réseau à tester. On comprendra donc que la qualité du signal à l'émission peut être ainsi suffisamment élevée pour pouvoir, une fois le signal reçu par un appareil de test, rester suffisamment bonne afin d'obtenir une estimation fiable de la qualité du système de transmission, par exemple en utilisant des algorithmes appropriés comme un algorithme d'évaluation perceptuelle de la qualité vocale (« Perceptual Evaluation of Speech Quality », encore appelé PESQ) dont une version normalisée est décrite dans les recommandations P862 à P862.3.

Avantageusement, dans le dispositif de génération d'un signal, le moyen de conversion comprend un convertisseur numérique/analogique, et le dispositif comprend un moyen de contrôle adapté pour reconnaître la fréquence d'échantillonnage du fichier numérique précité et pour délivrer au convertisseur numérique/analogique une fréquence d'horloge dépendant de la fréquence d'échantillonnage du fichier numérique.

Cette précaution permet d'obtenir la meilleure qualité de signal analogique possible pour chaque fichier numérique converti, en plus d'offrir une flexibilité accrue en permettant l'utilisation de fichiers numériques échantillonnés à différentes fréquences.

Avantageusement, le dispositif de génération comprend un moyen de traitement adapté pour convertir le signal analogique en un signal numérique à transmettre au travers du système de communication.

On peut alors générer un signal de test utilisable dans le cadre de la transmission de données sous forme numérique, comme par exemple dans le cadre de la transmission par paquets utilisée entre autres dans les réseaux dits de « Voix sur IP ».

Avantageusement, le dispositif de génération comprend une interface adaptée au transfert de fichiers numériques, depuis un appareil extérieur au dispositif de génération vers le moyen de stockage numérique.

Une telle interface permet, entre autres, d'adapter le signal généré au type de système à tester, en transférant un fichier numérique dont la qualité, liée notamment à sa fréquence d'échantillonnage, son encodage et à sa taille de fichier, pourra être choisie en fonction de paramètres du système à tester.

En outre, la présente invention vise un terminal de communication comprenant un dispositif de génération d'un signal, tel que décrit précédemment, pour estimer la qualité de transmission dans un système de communication.

La présente invention vise aussi un système d'estimation de la qualité de transmission dans un système de communication, comportant .
- un dispositif de génération d'un signal tel que décrit ci-dessus,
- un appareil de mesure apte à recevoir un signal, généré par ledit dispositif de génération et transitant par le système de communication, et à estimer la qualité de transmission du système de communication en fonction du signal reçu.

Avantageusement, l'appareil de mesure comporte un moyen de stockage d'un fichier numérique de référence, lié au fichier numérique enregistré dans le moyen de stockage du dispositif de génération, ainsi qu'un moyen d'évaluation adapté pour estimer la qualité de transmission du système de communication en fonction d'une comparaison entre le signal reçu et le fichier numérique de référence.

Cette précaution permet d'obtenir une estimation directe de la qualité de transmission du système, en utilisant par exemple, dans le moyen d'évaluation, un algorithme donnant un niveau de qualité basé sur la comparaison du signal reçu avec le signal émis, comme c'est le cas avec un algorithme d'évaluation perceptuelle de la qualité vocale, entre autres.

La présente invention vise aussi un procédé général de génération d'un signal pour estimer la qualité de transmission du signal dans un système de communication, comprenant les étapes suivantes.
- réception par un dispositif répondeur d'une demande de test de qualité du réseau de communication,
- conversion d'au moins un fichier numérique stocké dans ledit dispositif répondeur en un signal analogique, en réponse à la demande de test, ladite conversion étant menée en appliquant au moins un paramètre fonction d'au moins un paramètre propre au fichier numérique.

On comprendra ainsi que le procédé peut être mis en oeuvre de façon très générale par tout type de dispositif apte à délivrer un signal ayant la qualité requise pour estimer finement les caractéristiques d'un système de transmission ou d'un réseau de transmission. Il peut s'agir d'un répondeur téléphonique comme dans un mode de réalisation avantageux décrit précédemment, mais aussi d'un dispositif répéteur en tant qu'équipement d'un réseau de communication. Un tel dispositif répéteur peut être disposé en tout point du réseau, par exemple dans un noeud, afin d'évaluer la qualité de transmission d'un tronçon particulier ou d'une branche particulière du réseau.

Ainsi, le dispositif au sens de l'invention peut se présenter sous diverses formes de réalisation et n'est pas limité à la forme présentée dans la présente description.

Avantageusement, l'étape de réception de la demande de test est précédée par une étape de connexion dudit dispositif répondeur à un appareil, par le biais d'une interface dédiée, suivie d'une étape de transfert d'au moins un fichier numérique depuis l'appareil vers le dispositif répondeur.

Une telle mesure permet de transférer un fichier numérique dans le dispositif répondeur sans avoir besoin de télécharger ce fichier par le système de transmission à évaluer lui-même, ce qui limite la taille, et donc la qualité, des fichiers du fait de la bande passante limitée des systèmes de transmission. Cela permet en outre un transfert plus rapide de fichiers numériques de grande taille dans le dispositif répondeur.

Le procédé de génération de signal décrit ci-dessus peut être utilisé dans le cadre plus particulier d'un procédé d'estimation de la qualité d'un système de communication.

La présente invention vise aussi un procédé d'estimation de la qualité de transmission d'un système de communication, comprenant les étapes suivantes :
- réception par un dispositif répondeur d'une demande de test de qualité du système de communication,
- conversion, en réponse à la demande de test, d'au moins un fichier numérique stocké dans ledit dispositif répondeur en un signal analogique, ladite conversion étant menée en appliquant au moins un paramètre fonction d'au moins un paramètre propre au fichier numérique.

- transmission d'un signal basé sur ledit signal analogique, depuis le dispositif répondeur vers un appareil de mesure, au travers d'au moins une partie du système de communication.
- réception, par l'appareil de mesure, du signal transmis,
- évaluation de la qualité de transmission du système de communication en fonction du signal reçu.

La présente invention vise par ailleurs un programme informatique comportant des instructions pour la mise en oeuvre du procédé de génération de signal tel que décrit ci-avant, lorsque ce programme est exécuté par un processeur. Un tel programme peut être stocké en mémoire dans un dispositif de génération tel que décrit précédemment.

En outre, la présente invention vise un programme informatique comportant des instructions pour la mise en oeuvre du procédé d'estimation de la qualité de transmission dans un système de transmission tel que décrit ci-dessus, lorsque ce programme est exécuté par un processeur. Un tel programme peut être stocké en mémoire dans un dispositif de génération tel que décrit ci-avant ou un dispositif quelconque appartenant au système à évaluer, par exemple.

Les caractéristiques et avantages de l'invention apparaîtront plus clairement à la lecture de la description, faite à titre d'exemple, et des figures s'y rapportant qui représentent :
- La figure 1 montre un exemple de système de communication destiné à être testé dans le cadre de l'invention ;
- La figure 2 représente un schéma synoptique d'un système d'estimation de la qualité de transmission, selon l'invention, incluant un dispositif de génération d'un signal pour évaluer la qualité de transmission et un appareil de mesure ;
- La figure 3 est un organigramme illustrant des procédés de génération de signal et d'estimation de la qualité d'un système de transmission, selon l'invention ;
- La figure 4 représente un autre exemple de dispositif de génération d'un signal, selon l'invention ;
- La figure 5 montre un organigramme illustrant un autre exemple de procédé d'estimation de la qualité de transmission d'un système de communication, selon l'invention.

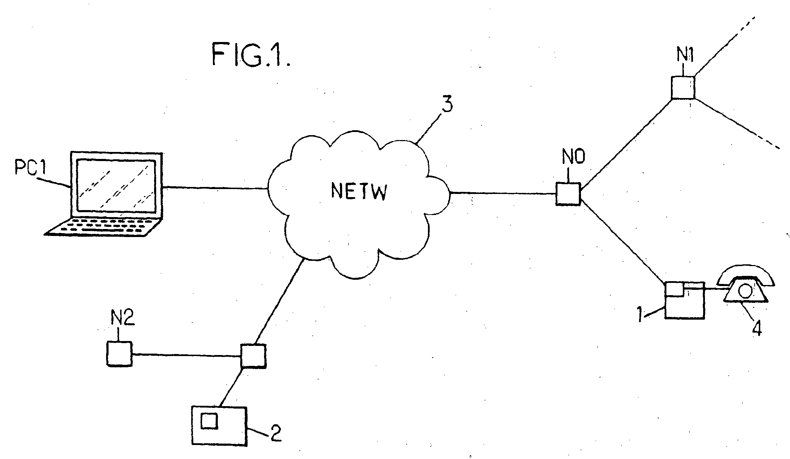

La **figure 1** illustre un exemple de système de communication destiné à être évalué dans le cadre de l'invention.

La figure 1 représente un système de communication dans lequel un dispositif de génération de signal 1 est connecté à un appareil de mesure 2 au travers d'un système de communication 3. Le système de communication peut avoir une multitude de branches et former alors un réseau de communication, avec des noeuds N0, N1 et N2. Un ordinateur PC1 peut être connecté au système 3, et un téléphone 4 peut être connecté au dispositif de génération 1. Cependant, le dispositif de génération 1 n'est pas nécessairement raccordé à un téléphone. Le réseau de communication présenté peut être de type analogique, tel un réseau de téléphonique commuté (RTC). Il peut aussi être de type numérique, comme par exemple un Réseau Numérique à Intégration de Service (RNIS) ou un réseau acceptant le protocole TCP/IP, permettant notamment d'utiliser la technique de transmission de voix sur réseau IP (« Voice over IP » en anglais, ou encore « VoIP »).

Le dispositif de génération 1 est adapté pour générer un signal en réponse à une demande de test provenant du réseau. Cette demande de test peut provenir d'un appareil de mesure 2 par exemple. En réponse à une telle demande, le dispositif de génération 1 génère un signal destiné à être émis vers l'appareil de mesure 2. Avant d'arriver à l'appareil de mesure, le signal émis transite dans le système de communication 3 et subit diverses dégradations qui vont dépendre de sa propre nature et de paramètres liés au système de transmission. Par exemple, si le signal transmis est de type analogique, un bruit de fond plus ou moins important apparaîtra sur le signal du fait de la transmission. De même, pour un signal de type numérique, des pertes de paquets de données du signal vont se produire, entraînant la dégradation du signal numérique reçu. La dégradation dépend aussi de paramètres propres au système de transmission, comme sa longueur, la qualité des éléments le constituant. Aussi pour un type de signal donné, la réception d'un signal de test transmis donnera une idée de la qualité de transmission du système de transmission utilisé.

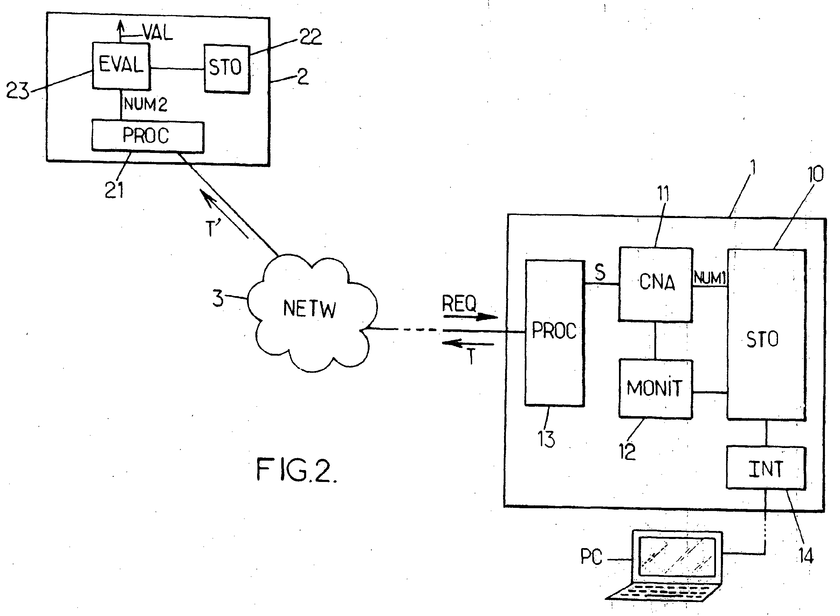

La **figure 2** illustre un système d'estimation de la qualité de transmission, selon l'invention, incluant un dispositif de génération d'un signal pour évaluer la qualité de transmission d'un système de communication et un appareil de mesure.

Le dispositif de génération 1 comporte un moyen de stockage numérique 10 permettant le stockage de fichiers numériques. Ce moyen de stockage numérique peut être, par exemple, une mémoire FLASH dont la capacité permet le stockage d'un ou plusieurs fichiers de référence. Dans le cas de la mesure de qualité audio d'un signal de transmission, la capacité doit être suffisante pour permettre le stockage d'un ou plusieurs fichiers audio non compressés en 16 bits et échantillonnés jusqu'à 48 KHz. On peut ainsi stocker des fichiers audio sous forme numérique au format WAV PCM sans perte ou dans un format de compression éprouvé comme, par exemple, un format mp3, mp4 ou OGG, qui est un codeur libre de droit.

Le moyen de stockage 10 est relié à un moyen de conversion 11 adapté pour convertir un ou plusieurs fichiers numériques provenant du moyen de stockage en un signal analogique. Le moyen de conversion peut être réalisé par le biais d'un convertisseur numérique/analogique fonctionnant à une fréquence de fonctionnement pouvant varier.

La conversion est menée en appliquant au moins un paramètre fonction d'au moins un paramètre propre au fichier numérique. Autrement dit, pour deux fichiers numériques différents, avec par exemple un paramètre tel que la fréquence d'échantillonnage qui diffère, la conversion sera effectué en appliquant un paramètre, tel une fréquence d'horloge de fonctionnement de la conversion, qui sera adaptée à chacun des deux fichiers numériques différents. Ceci permet de ne pas être limité à un type de fichier numérique utilisant une seule fréquence de fonctionnement, mais de pouvoir s'adapter à différents types de fichiers numériques, échantillonnés à des fréquences différentes. Le dispositif devient ainsi évolutif.

Le dispositif de génération 1 comprend, en outre, un moyen de contrôle 12 pouvant obtenir des informations au sujet des fichiers numériques stockés dans le moyen de stockage 10 et les utiliser dans le cadre de la conversion numérique/analogique. Par exemple, le moyen de contrôle peut détecter la fréquence d'échantillonnage d'un fichier numérique, par exemple par lecture de l'entête du fichier numérique dans lequel la fréquence d'échantillonnage est indiquée. Il détermine alors une fréquence de fonctionnement, communément appelée fréquence d'horloge, à appliquer au moyen de conversion, propre à chaque fichier numérique à convertir, en fonction de la fréquence d'échantillonnage détectée. Par exemple, le moyen de contrôle peut appliquer au moyen de conversion une fréquence d'horloge égale à la fréquence d'échantillonnage. Ceci permet d'adapter la conversion numérique/analogique aussi bien au type de fichier numérique stocké qu'au type de système de communication à mesurer. On a donc une plus grande liberté concernant le choix des fichiers audio numériques à stocker, contrairement aux répondeurs usuels où, la fréquence d'horloge des convertisseurs numériques/analogiques étant fixée; seulement des fichiers numériques avec une fréquence d'échantillonnage donnée peuvent être stocké en mémoire. Cela permet de suivre l'évolution des systèmes de transmission et de répondre au besoin d'utiliser des fichiers numériques avec des fréquences d'échantillonnage croissantes, donc offrant une meilleure qualité, sans forcément avoir besoin de changer de dispositif répondeur.

Le moyen de conversion 11, ainsi contrôlé par l'horloge fourni par le moyen de contrôle 12, délivre un signal analogique en sortie, dont la qualité va dépendre de la qualité du fichier numérique converti. Ainsi, un fichier audio numérique non compressé, codé en 16 bits et échantillonné jusqu'à 48 KHz, comme c'est le cas quand le fichier est au format WAV PCM, présente une qualité bien supérieure à un fichier numérique audio codé en 8 bits et échantillonné à 16 KHz, ou qu'un fichier audio codé en 16 bits et échantillonné à 8 KHz, comme c'est le cas dans les répondeurs numériques usuels. En conséquence, un signal analogique découlant d'un tel fichier audio codé en 16 bits et échantillonné jusqu'à 48 KHZ sera de qualité bien supérieure à celle de fichiers analogiques audio découlant de la conversion d'un fichier numérique audio codé en 8 bits et échantillonné à 16 KHz, ou codé en 16 bits et échantillonné à 8 KHz.

De préférence, les fichiers numériques stockés dans le moyen de stockage, 2 sont des fichiers numériques échantillonnés à une fréquence élevée. On entend ici par fréquence élevée toute fréquence supérieure ou égale à 16 KHz, comme par exemple des fréquences de 32 KHz, 44,1 KHz ou 48 KHz, usuellement employées par exemple dans l'encodage numérique de fichiers audio. Des fichiers avec de telles fréquences élevées permettent avantageusement d'obtenir une estimation de la qualité de transmission beaucoup plus précise qu'avec les fichiers numériques usuellement employés dans les répondeurs numériques actuels, qui présentant des fréquences d'échantillonnage faibles, c'est-à-dire inférieures à 8 KHz.

Le signal analogique S(t), généré par le moyen de conversion 11, peut être transmis directement vers le système de communication à évaluer. C'est par exemple le cas dans un système de téléphonie utilisant des signaux analogiques, comme un réseau téléphonique commuté (RTC). C'est alors le signal généré S(t) lui-même qui sert de signal de test T transitant dans le système de transmission.

Le signal analogique généré S(t) peut aussi être prétraité avant d'être transmis dans le système de transmission. Ainsi, dans le cas d'un système de transmission numérique comme un réseau de téléphonie mobile, un réseau de type RNIS ou un réseau numérique à protocole TCP/IP, le signal analogique généré S(t) sera converti en un signal numérique T par le biais d'un moyen de traitement 13. Ce moyen de traitement 13 peut comprendre un convertisseur analogique/numérique adapté pour cette opération. La fréquence d'échantillonnage utilisée pour reconvertir numériquement le signal analogique peut être identique à la fréquence d'horloge utilisée par le moyen de conversion numérique/analogique, ou différente si cela est approprié à un type de système de transmission particulier. Dans ce dernier cas, on parle d'encodage numérique du signal analogique et le convertisseur analogique/numérique du moyen de traitement 13 est appelé plus communément encodeur numérique. Un encodage typique peut être fait à une fréquence de 44,1 KHz pour des applications dites « fullband ».

Outre l'opération de conversion analogique/numérique, le moyen de traitement 13 peut avoir une fonction de détection d'appel entrant et de décroché du dispositif répondeur. Ainsi, lorsqu'une demande de test REQ atteint le dispositif 1, le moyen de traitement 13 reçoit cette demande, décroche la ligne et va initier la conversion numérique/analogique. De la même façon, une fois le signal de test T transmis, le moyen de traitement 13 peut raccrocher la ligne afin de terminer l'appel.

Le dispositif de génération 1 peut comporter aussi une interface 14 reliée au moyen de stockage numérique. Cette interface permet de connecter le dispositif 1 à un appareil extérieur, comme un ordinateur PC par exemple. Elle est donc dédiée seulement à cette connexion, et ne sert pas à communiquer avec le système de transmission, qui communique lui avec le moyen de traitement 13. Une telle interface permet le transfert de fichier numériques vers ou depuis le moyen de stockage 10, sans avoir à passer par le système de transmission, dont la bande passante limiterait la taille des fichiers pouvant être stockés dans le moyen de stockage.

Cette interface 14 peut être une interface à haut débit, permettant le transfert rapide de fichiers numériques de grande taille. Ainsi, des fichiers numériques encodés- sur une large plage de bits et/ou échantillonnés à des fréquences élevées, et dont la taille mémoire est par conséquent plus importante, peuvent être transférés rapidement dans le dispositif 1.

De préférence, l'interface à haut débit 14 est une interface de type « plug and play », permettant une connexion aisée sans avoir besoin d'une procédure d'installation particulière. Ainsi, le dispositif 1 peut recevoir des fichiers numériques provenant d'une multitude d'appareils variés.

Parmi les types d'interface « plug and play », l'interface à haut débit 14 peut être une interface de type USB. Une telle interface, utilisée par exemple lors de la connexion du dispositif 1 avec un ordinateur, permet une gestion simple des fichiers numériques stockés dans le dispositif par le système d'exploitation de l'ordinateur. On peut ainsi transférer des fichiers vers le dispositif, les effacer du moyen de stockage, les charger depuis le moyen de stockage, simplement comme on ferait les mêmes opérations avec un disque dur connecté à l'ordinateur.

Par ailleurs, le dispositif de génération 1, tel que décrit ci-avant, peut constituer une entité autonome à part entière, ou bien faire partie d'une autre entité de communication, comme par exemple un terminal de communication, lequel peut être fixe ou mobile.

La figure 2 illustre aussi un autre objet de l'invention, à savoir un système d'estimation de la qualité de transmission d'un système de communication.

Outre le dispositif de génération 1 tel que décrit ci-dessus, un tel système d'estimation comporte un appareil de mesure 2.

L'appareil de mesure 2 comporte un moyen de traitement 21 recevant le signal de test dégradé T', correspondant au signal de test T émis par le dispositif 1 dégradé après sa transmission dans le système de communication 3. Ce moyen de traitement 21 peut aussi émettre la demande de test REQ destinée au dispositif 1, tout en sachant que cette demande de test peut tout aussi bien provenir d'un autre appareil du système 3.

Une fois le signal de test dégradé T' reçu par le moyen de traitement 21, l'appareil de mesure 2 va l'utiliser pour estimer la qualité de transmission du système de transmission. Dans le cas d'un système de transmission analogique, et afin de réaliser cette estimation, le moyen de traitement va d'abord convertir le signal analogique reçu en un fichier numérique reçu. Ceci peut être fait avec un convertisseur analogique/numérique conventionnel.

De plus, l'appareil de mesure peut comprendre un moyen de stockage numérique 22, dans lequel est mémorisé un fichier de référence. Le fichier de référence est lié de préférence au fichier numérique stocké, ou à la pluralité de fichiers stockés, dans le moyen de stockage 10. Dans un cas optimal, on stocke un fichier de référence identique à celui stocké dans le moyen de stockage 10 du dispositif 1. Ce fichier de référence peut aussi correspondre à l'agrégation de plusieurs, voire de tous les-fichiers numériques stockés dans le moyen de stockage 10.

L'appareil de mesure 2 comprend aussi un moyen d'évaluation 23 adapté pour évaluer la qualité de transmission en fonction du fichier numérique dégradé reçu. Ceci peut se faire, par exemple, par la comparaison du fichier de référence stocké dans le moyen de stockage 22 avec le fichier numérique dégradé reçu. En fonction de la différence observée, on peut déduire la qualité de transmission du système. Par exemple, un fichier reçu quasiment identique au fichier de référence indique une bonne qualité de transmission. A l'inverse, un fichier reçu très différent du fichier de référence indique une mauvaise qualité de transmission.

Dans le but d'obtenir une évaluation VAL précise de la qualité de transmission, un outil d'estimation algorithmique peut être utilisé, comme par exemple un outil d'évaluation de la qualité vocale perçue (« Perceptual Evaluation of Speech Quality » en anglais), et normalisé par l'UIT sous le nom P.862. Un tel outil se base sur la comparaison entre le fichier reçu et un fichier de référence.

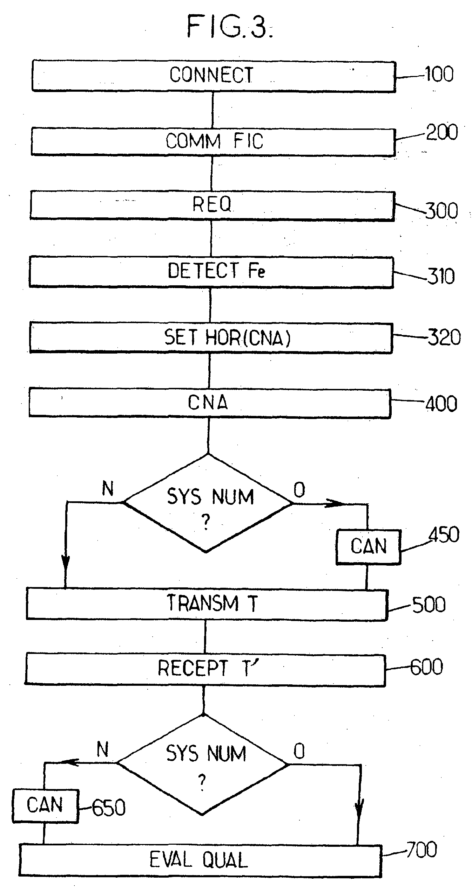

La **figure 3** illustre un procédé de génération d'un signal pour estimer la qualité de transmission d'un réseau de communication, selon un autre objet de l'invention.

Dans une première étape de connexion 100, un dispositif répondeur, du type d'un dispositif de génération de signal pour estimer la qualité de transmission d'un système de communication tel que décrit précédemment, est connecté à un appareil, comme par exemple un ordinateur. Cette connexion peut être établie par le biais d'une interface dédiée, c'est-à-dire ne servant pas à connecter le dispositif répondeur au système de transmission, de type « plug and play », comme par exemple une interface USB pouvant connecter le dispositif à un ordinateur.

Dans une deuxième étape 200, au moins un fichier numérique est transféré dans le dispositif répondeur. Ce transfert peut s'accompagner d'une étape de gestion des fichiers numériques stockés dans le dispositif répondeur, par exemple grâce au système d'exploitation d'un ordinateur relié au dispositif répondeur par une interface USB, et pour lequel le dispositif répondeur est assimilé simplement à un disque dur. Les fichiers numériques stockés dans le dispositif répondeur peuvent ainsi être gérés afin d'en ajouter, d'en supprimer ou de programmer certains de ces fichiers.

Par la suite, une étape de réception 300 d'une demande de test du système de transmission a lieu. Cette demande de test peut provenir du système de transmission à mesurer lui-même, par exemple d'un appareil de mesure connecté au système et émettant une telle demande de test en direction du dispositif répondeur, ou d'un autre système, voire simplement d'un utilisateur actionnant le dispositif répondeur.

Suite à l'étape de demande de test 300, une étape de conversion numérique/analogique 400 a lieu, visant à convertir un ou plusieurs des fichiers numériques stockés dans le dispositif répondeur en un signal analogique.

Cette conversion est effectuée en appliquant un paramètre fonction d'au moins un des paramètres du fichier numérique, ou des fichiers numériques, à convertir. Par exemple, un de ces paramètres peut être la fréquence d'échantillonnage du fichier numérique à convertir. Dans ce cas, avant l'étape de conversion 400, une étape 310 de détection de la fréquence d'échantillonnage du fichier numérique stocké est effectuée. Cette étape peut être faite par lecture d'un entête, ou d'un quelconque champ de données, du fichier numérique indiquant la fréquence d'échantillonnage, ou par tout autre moyen permettant cela. Cette étape est suivie, toujours avant l'étape de conversion 400, d'une étape 320 de réglage de la fréquence d'horloge utilisée pour la conversion à une fréquence fonction de la fréquence d'échantillonnage détectée. Un cas optimal peut être de fixer ladite fréquence d'horloge à la fréquence d'échantillonnage détectée, afin d'avoir une fréquence de conversion numérique/analogique identique à celle de la conversion analogique/numérique utilisée lors de la numérisation du fichier à convertir.

Une. fois le signal analogique obtenu, il peut être transmis directement en tant que signal de test vers le système de communication, ou bien être traité avant d'être transmis. Par exemple, dans le cas d'un système numérique, une étape supplémentaire de conversion analogique/numérique 450 a lieu, après l'étape de conversion numérique/analogique 400, afin d'adapter le signal à transmettre au type de système de transmission numérique à évaluer.

La figure 3 illustre en outre un autre objet de l'invention, à savoir un procédé d'estimation de la qualité de transmission d'un système de communication.

Un tel procédé comprend toutes les étapes du procédé de génération d'un signal tel que décrit précédemment, ou une quelconque combinaison d'étapes comprenant au moins les étapes 300 et 400 du procédé de génération d'un signal tel que décrit précédemment.

A l'issue de ces étapes de procédé de génération d'un signal, une étape 500 de transmission de ce signal, appelé de test, au travers du système de transmission à évaluer s'ensuit. Au cours de cette étape, le signal de test subit des dégradations dépendant du système et de sa qualité de transmission.

Le signal transmis est reçu par un appareil de mesure lors d'une étape 600, afin d'être utilisé pour évaluer la qualité de transmission du système. Dans le cas où le système de communication est analogique, l'étape de réception 600 est suivie d'une étape de conversion analogique/numérique 650 visant à transformer le signal analogique dégradé reçu en un fichier numérique reçu. Dans le cas où le système de communication est numérique, le fichier numérique reçu est directement utilisé pour évaluer la qualité de transmission.

A cette fin, l'étape de réception 600 est suivie d'une étape d'évaluation 700 évaluant la qualité de transmission du système sur la base du fichier numérique reçu. Cette évaluation peut être effectuée par comparaison du fichier numérique reçu avec un fichier numérique de référence, pouvant être une copie du ou des fichiers numériques transférés initialement dans le dispositif répondeur et stocké dans ce dispositif. Ainsi, lorsque les deux fichiers comparés présentent de faibles différences, on pourra estimer que la qualité de transmission est relativement bonne. Au contraire, si les deux fichiers comparés sont très différents, cela sera l'indication d'une mauvaise qualité de transmission. Une telle comparaison peut se faire grâce à un outil d'estimation algorithmique, comme par exemple un outil d'évaluation de la qualité vocale perçue (« Perceptual Evaluation of Speech Quality » en anglais), et normalisé par l'UIT sous le nom P.862.

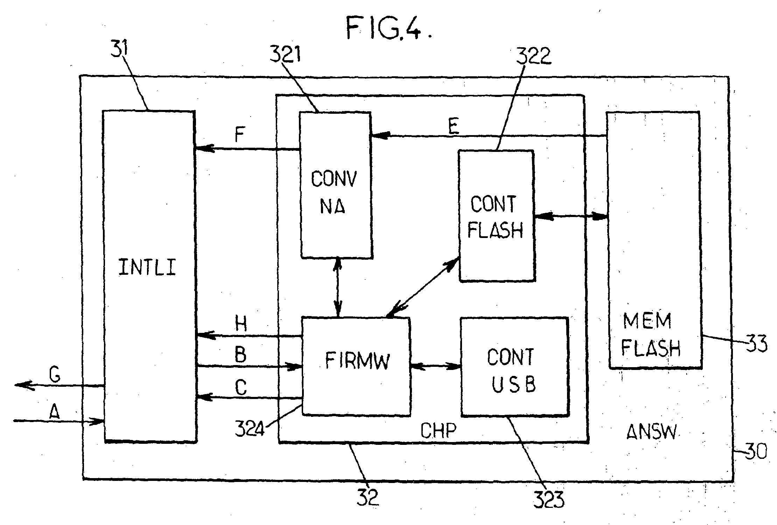

La **figure 4** présente un autre exemple de système de répondeur numérique selon l'invention.

Le système de répondeur numérique de la figure 4- est composé tout d'abord d'une puce lecteur multimédia intégrée 32, similaire par exemple à celles qui équipent habituellement les lecteurs audio numériques portables.

Il est composé en outre d'une interface ligne 31 qui fait l'interface entre les réseaux téléphoniques, de type analogique, DETC, IP ou GSM, et le firmware 324. Le rôle de l'interface ligne est de détecter l'arrivée d'un appel et de transmettre l'information au firmware. Elle transmet aussi le signal audio émis par le répondeur au réseau en intégrant un système de transmission requis par le réseau en question, par exemple en utilisant un codage numérique, ou un passage 4 fils 2 fils. Le système de transmission fonctionne à une fréquence d'échantillonnage donnée. On tire ainsi avantage de l'aspect fréquence ajustable de diffusion, permettant par exemple la diffusion en bande élargie sur un réseau selon la norme G722 ou toute autre norme bande élargie.

Il comprend aussi une mémoire FLASH 33 dont la capacité permet le stockage d'un ou de plusieurs fichiers de référence (non compressés en 16 bits et 48 KHz) pour la mesure de la qualité audio.

Le sous-système puce lecteur multimédia intégrée 32 est une puce programmable, son programme appelé «firmware» pilote les différents sous-systèmes de la puce. La puce comprend aussi des entrées et sorties numériques pour permettre l'interaction avec des éléments extérieurs.

Les sous-systèmes de la puce consistent en un convertisseur numérique analogique 321, de type « multi fréquences d'échantillonnages », un contrôleur de mémoire FLASH 322 qui permet de lire ou d'écrire les informations sur la mémoire FLASH 33, ainsi qu'un contrôleur USB 323 qui permet de relier le répondeur sur un PC afin d'effectuer la programmation du répondeur. Ce contrôleur USB permet de charger un fichier de référence depuis le PC vers la mémoire FLASH. Il permet aussi de charger un nouveau Firmware sur la Puce Lecteur MultiMedia. Le sous-système puce comprend, en outre, un firmware 324 qui est le programme coeur du répondeur. Il pilote tous les autres sous-systèmes de la puce lecteur multimédia 32.

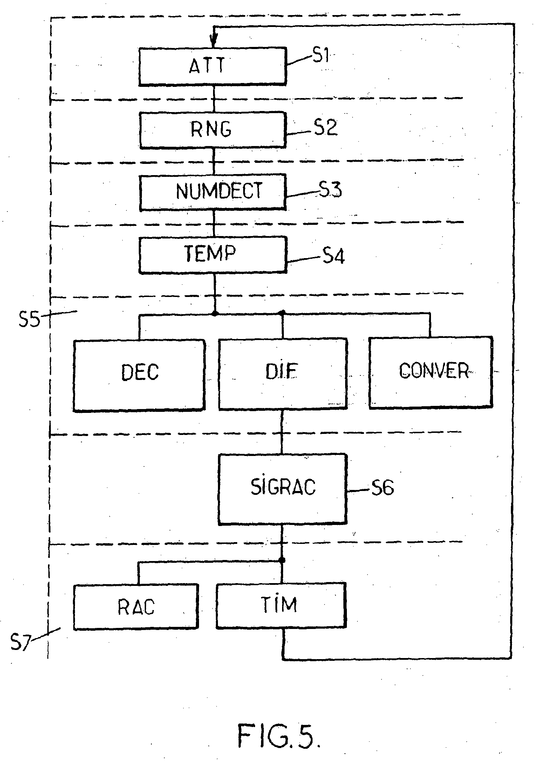

La **figure 5** illustre un exemple de mode de réalisation d'un procédé d'estimation de la qualité de la voix d'un réseau analogique.

On décrit ici le comportement du répondeur numérique décrit précédemment et programmé avec le firmware dédié à la mesure de la qualité vocale. Nous considérons qu'un fichier de référence à 48 KHz et 16 bits a été chargé auparavant dans la mémoire flash via un PC et le contrôleur USB. L'interface ligne est une interface analogique pour le réseau RTC.

L'appel vers le répondeur est produit par une sonde de mesure distante. Le firmware du répondeur a été développé de manière à ce qu'il y ait une parfaite synchronisation entre le répondeur et la sonde distante lors des différentes séquences de mesure.

Lors d'une première étape S1, le firmware 324 est en attente d'un signal de sonnerie de la part de l'interface ligne.

Lors d'une seconde étape S2, la sonde distante produit un appel, ce qui se traduit par un signal de sonnerie sur la ligne.

Au cours d'une troisième étape S3, l'interface ligne 31 détecte ce signal et transmet un signal numérique vers le firmware 324, par passage du bit de sonnerie de 0 vers 1 lorsque le niveau électrique sur la ligne dépasse un seuil donné. La puce lecteur multimédia 32 est munie d'entrées et sorties programmables.

S'ensuit alors une quatrième étape S4 où le firmware 324 traite le signal numérique reçu de manière à différencier une sonnerie d'une perturbation réseau. 7 secondes après la confirmation de détection de sonnerie, il envoie un signal numérique à l'interface ligne 31 pour lui signaler de décrocher la ligne, par passage du bit décroché de 0 vers 1.

Ensuite, lors d'une cinquième étape S5, l'interface ligne 31 décroche la ligne, en parallèle, le firmware 324 demande au contrôleur FLASH 322 de lire les informations en mémoire et de les diffuser vers le convertisseur numérique analogique 321. En parallèle, le firmware 324 demande au convertisseur numérique analogique 321 de convertir le signal de référence en 48 KHz et 16 bits en un signal analogique. Le convertisseur 321 diffuse le message vers l'interface ligne 31 qui convertit le signal, par conversion 4 fils vers 2 fils, pour le réseau analogique.

A la fin de la diffusion du message, le firmware 324 demande, au cours d'une sixième étape S6, le raccroché à l'interface ligne 31, par passage du bit de décroché 1 vers 0.

Enfin, lors d'une septième étape S7, l'interface ligne 31 raccroche la ligne. Le firmware 324 temporise deux secondes puis redémarre un cycle à partir de la première étape.

La présente invention ne se limite pas à la forme de réalisation décrite ci-avant à titre d'exemple. Elle s'étend à d'autres variantes.

Ainsi, dans toute la description, le terme « dispositif répondeur » est à prendre au sens d'un dispositif recevant un signal sous une première forme, afin de l'émettre sous une deuxième forme. Une telle opération n'est pas forcément immédiate, mais peut être effectuée en deux temps, grâce à la présence d'un moyen de stockage dans le dispositif dit « répondeur », permettant le stockage intermédiaire d'un signal sous sa première forme, en l'occurrence numérique, avant de le transmettre, dans un deuxième temps, sous une forme analogique.

Il est particulièrement avantageux d'utiliser les procédés selon l'invention dans le cas d'un système de téléphonie, où le fichier numérique stocké est un fichier audio sous forme numérique et où le signal généré par le dispositif de génération est un signal analogique audio.

Il est aussi avantageux d'utiliser les procédés selon l'invention dans le cas d'un système numérique, tel un système de téléphonie mobile ou un système de transmission de données avec le service de type « VoIP », où le fichier numérique stocké est un fichier audio sous forme numérique et où le signal généré par le dispositif de génération est un signal numérique audio.

L'invention ne se limite cependant pas à l'utilisation de fichiers numériques et de signaux analogiques audio. Les procédés décrits ci-avant peuvent utiliser des fichiers numériques vidéo, permettant la génération de fichiers analogiques vidéo, par exemple.

De même, l'évaluation de la qualité ne doit pas forcément être faite sur la totalité d'un système, mais peut être effectuée sur toute partie d'un système, sur une branche ou un tronçon d'un réseau, par exemple.

Parmi les paramètres du fichier numérique utilisés pour le fonctionnement de la conversion numérique/analogique dans les procédés ci-avant, d'autres paramètres que la fréquence d'échantillonnage peuvent être pris en compte, suivant les applications, comme la taille mémoire du fichier ou la longueur en bits de l'encodage du fichier, par exemple.

En ce qui concerne la détection de la fréquence d'échantillonnage du fichier numérique, elle ne se limite pas à la simple lecture de l'entête du fichier, mais peut consister en la lecture de tout champ de données dans lequel se trouverait cette information, voire en la détection non intrusive de cette fréquence d'échantillonnage, par mesure au moyen de tout appareil permettant de détecter cette fréquence, par exemple.

Les formats de fichiers numériques utilisés ci-avant ne se limitent pas à ceux qui sont cités, comme les formats WAV PCM, MP3, MP4 ou OGG, mais peuvent être compris comme étant n'importe quel format permettant d'encoder numériquement un signal audio analogique. Par analogie, l'invention recouvre tout type de fichier numérique vidéo, par exemple au format AVI, MPG, DIVX, entre autres.

Les algorithmes d'évaluation de la qualité utilisés dans la solution décrite ci avant ne se limitent pas à l'algorithme PESQ, mais à l'ensemble des algorithmes existants et futurs permettant d'obtenir une évaluation de la qualité (vocale, audio ou vidéo) d'un signal, et qui sont basés sur l'analyse d'un signal transmis à travers un réseau, par un système d'estimation de qualité vocale selon la présente invention, en utilisant ou non un signal de référence.

## Revendications

1. Dispositif de génération d'un signal (1) pour estimer la qualité de transmission dans un système de communication. (3), comportant :
- un moyen de stockage numériques (10) d'au moins un fichier numérique,
- un moyen de conversion (11) adapté pour, en réponse à une demande de test (REQ) de qualité du système de communication, convertir le fichier numérique (NUM1) en un signal analogique (S) à transmettre au travers dudit système de communication (3), ladite conversion étant menée en appliquant au moins un paramètre fonction d'au moins un paramètre propre au fichier numérique.

2. Dispositif de génération d'un signal selon la revendication 1, dans lequel le moyen de conversion comprend un convertisseur numérique/analogique, et est **caractérisé en ce qu'**il comprend un moyen de contrôle adapté pour reconnaître la fréquence d'échantillonnage du fichier numérique et pour délivrer au convertisseur numérique/analogique une fréquence d'horloge dépendant de ladite fréquence d'échantillonnage du fichier numérique.

3. Dispositif de génération d'un signal selon la revendication 1, **caractérisé en ce qu'**il comprend en outre un moyen de traitement adapté pour convertir le signal analogique en un signal numérique à transmettre au travers dudit système de communication.

4. Dispositif de génération d'un signal selon la revendication 1, **caractérisé en ce qu'**il comprend une interface adaptée au transfert de fichiers numériques, depuis un appareil extérieur au dispositif de génération vers le moyen de stockage numérique.

5. Terminal de communication, **caractérisé en ce qu'**il comprend un dispositif de génération (1) d'un signal pour estimer la qualité de transmission dans un système de communication (3) selon l'une des revendications précédentes.

6. Système d'estimation de la qualité de transmission d'un système de communication, comportant :
- un dispositif de génération d'un signal (1) selon l'une des revendications 1 à 4,
- un appareil de mesure (2) apte à recevoir un signal (T'), généré par ledit dispositif de génération (1) et transitant par le système de communication (3), et à estimer la qualité de transmission du système de communication (3) en fonction du signal reçu.

7. Système d'estimation de la qualité de transmission d'un système de communication selon la revendication précédente, **caractérisé en ce que** l'appareil de mesure comporte un moyen de stockage d'un fichier numérique de référence, lié au fichier numérique enregistré dans le moyen de stockage du dispositif de génération, ainsi qu'un moyen d'évaluation adapté pour estimer la qualité de transmission dudit système de communication en fonction d'une comparaison entre le signal reçu et ledit fichier numérique de référence.

8. Procédé de génération d'un signal pour estimer la qualité de transmission dû signal dans un système de communication, comprenant les étapes suivantes :
- réception (300) par un dispositif répondeur d'une demande de test de qualité du système de communication,
- conversion (400) d'au moins un- fichier numérique stocké dans ledit dispositif répondeur en un signal analogique, en réponse à la demande de test, ladite conversion étant menée en appliquant au moins un paramètre fonction d'au moins un paramètre propre au fichier numérique.

9. Procédé de génération d'un signal selon la revendication 8, **caractérisé en ce qu'**il comprend, avant l'étape de conversion, une étape de détection de la fréquence d'échantillonnage du fichier numérique stocké dans le dispositif répondeur et une étape de réglage de la fréquence d'horloge, utilisée pendant l'étape de conversion du fichier numérique, en fonction de la fréquence d'échantillonnage détectée.

10. Procédé de génération d'un signal selon la revendication 8, **caractérisé en ce que** l'étape de conversion du fichier numérique en un signal analogique est suivie par une étape de conversion du signal analogique en un fichier numérique à transmettre.

11. Procédé de génération d'un signal selon la revendication 8 comprenant, avant l'étape de réception de la demande de test, une étape de connexion dudit dispositif répondeur à un appareil par le biais d'une interface dédiée, suivie d'une étape de transfert d'au moins un fichier numérique depuis l'appareil vers le dispositif répondeur.

12. Procédé d'estimation de la qualité de transmission d'un signal dans un système de communication, selon la revendication 8, comprenant les étapes suivantes :
- transmission (500) d'un signal basé sur ledit signal analogique, depuis le dispositif répondeur vers un appareil de mesure, au travers d'au moins une partie du système de communication.
- réception (600), par l'appareil de mesure, du signal
- transmis,
- évaluation (700) de la qualité de transmission dans le système de communication en fonction du signal reçu.

13. Procédé d'estimation selon la revendication précédente, dans lequel l'étape d'évaluation comporte une étape de comparaison du signal reçu avec un fichier numérique de référence, lié au fichier numérique stocké dans le dispositif répondeur.

14. Programme informatique comportant des instructions pour la mise en oeuvre du procédé de génération de signal selon la revendication 8 lorsque ce programme est exécuté par un processeur.

15. Programme informatique comportant des instructions pour la mise en oeuvre d'un procédé d'estimation de la qualité de transmission dans un système de communication selon la revendication 12 lorsque ce programme est exécuté par un processeur.

## Patentansprüche

1. Vorrichtung zum Erzeugen eines Signals (1) zum Schätzen der Übertragungsqualität in einem Kommunikationssystem (3), die Folgendes umfasst:
- ein Mittel (10) zum digitalen Speichern wenigstens einer digitalen Datei,
- ein Umsetzungsmittel (11), das dafür ausgelegt ist, in Reaktion auf eine Anforderung (REQ) zum Prüfen der Qualität des Kommunikationssystems die digitale Datei (NUM1) in ein analoges Signal (S) umzusetzen, um es über das Kommunikationssystem (3) zu übertragen, wobei die Umsetzung durch Anwenden wenigstens eines Parameters, der eine Funktion wenigstens eines für die digitale Datei typischen Parameters ist, gesteuert wird.

2. Signalerzeugungsvorrichtung nach Anspruch 1, wobei das Umsetzungsmittel einen Digital/Analog-Umsetzer umfasst, **dadurch gekennzeichnet, dass** sie ein Steuermittel umfasst, das dafür ausgelegt ist, die Abtastfrequenz der digitalen Datei zu erkennen und an den Digital/Analog-Umsetzer eine Taktfrequenz zu liefern, die von der Abtastfrequenz der digitalen Datei abhängt.

3. Signalerzeugungsvorrichtung nach Anspruch 1, **dadurch gekennzeichnet, dass** sie außerdem ein Verarbeitungsmittel umfasst, das dafür ausgelegt ist, das analoge Signal in ein digitales Signal umzusetzen, das über das Kommunikationssystem zu übertragen ist.

4. Signalerzeugungsvorrichtung nach Anspruch 1, **dadurch gekennzeichnet, dass** sie eine Schnittstelle umfasst, die für die Übertragung digitaler Dateien von einem externen Gerät an die Erzeugungsvorrichtung über das digitale Speichermittel ausgelegt ist.

5. Kommunikationsendgerät, **dadurch gekennzeichnet, dass** es eine Vorrichtung (1) für die Erzeugung eines Signals zum Schätzen der Übertragungsqualität in einem Kommunikationssystem (3) nach einem der vorhergehenden Ansprüche umfasst.

6. System zum Schätzen der Übertragungsqualität eines Kommunikationssystems, das Folgendes umfasst:
- eine Signalerzeugungsvorrichtung (1) nach einem der Ansprüche 1 bis 4,
- eine Messvorrichtung (2), die dafür ausgelegt ist, ein von der Erzeugungsvorrichtung (1) erzeugtes und durch das Kommunikationssystem (3) laufendes Signal (T') zu empfangen und die Übertragungsqualität des Kommunikationssystems (3) als Funktion des empfangenen Signals zu schätzen.

7. System zum Schätzen der Übertragungsqualität eines Kommunikationssystems nach dem vorhergehenden Anspruch, **dadurch gekennzeichnet, dass** die Messvorrichtung ein Mittel zum Speichern einer digitalen Referenzdatei, die mit der in dem Speichermittel der Erzeugungsvorrichtung aufgezeichneten digitalen Datei in Beziehung steht, sowie ein Bewertungsmittel, das dafür ausgelegt ist, die Übertragungsqualität des Kommunikationssystems als Funktion eines Vergleichs zwischen dem empfangenen Signal und der digitalen Referenzdatei zu schätzen, umfasst.

8. Verfahren zum Erzeugen eines Signals zum Schätzen der Übertragungsqualität des Signals in einem Kommunikationssystem, das die folgenden Schritte umfasst:
- Empfangen (300) durch eine Antwortvorrichtung einer Anforderung zum Prüfen der Qualität des Kommunikationssystems,
- Umsetzen (400) wenigstens einer in der Antwortvorrichtung gespeicherten digitalen Datei in ein analoges Signal in Reaktion auf die Prüfanforderung, wobei die Umsetzung durch Anwenden wenigstens eines Parameters, der eine Funktion wenigstens der für die digitale Datei typischen Parameters ist, gesteuert wird.

9. Signalerzeugungsverfahren nach Anspruch 8, **dadurch gekennzeichnet, dass** es vor dem Umsetzungsschritt einen Schritt des Detektierens der Abtastfrequenz der in der Antwortvorrichtung gespeicherten digitalen Datei und einen Schritt des Regulierens der Taktfrequenz, die während des Schrittes des Umsetzens der digitalen Datei verwendet wird, als Funktion der detektierten Abtastfrequenz umfasst.

10. Signalerzeugungsverfahren nach Anspruch 8, **dadurch gekennzeichnet, dass** dem Schritt des Umsetzens der digitalen Datei in ein analoges Signal ein Schritt des Umsetzens des analogen Signals in eine zu übertragende digitale Datei folgt.

11. Signalerzeugungsverfahren nach Anspruch 8, das vor dem Schritt des Empfangens der Prüfanforderung einen Schritt des Verbindens der Antwortvorrichtung mit einer Vorrichtung über eine dedizierte Schnittstelle umfasst, gefolgt von einem Schritt des Übertragens wenigstens einer digitalen Datei von der Vorrichtung zu der Antwortvorrichtung.

12. Verfahren zum Schätzen der Übertragungsqualität eines Signals in einem Kommunikationssystem nach Anspruch 8, das die folgenden Schritte umfasst:
- Übertragen (500) eines Signals anhand des analogen Signals von der Antwortvorrichtung zu einer Messvorrichtung über wenigstens einen Teil des Kommunikationssystems,
- Empfangen (600) durch die Messvorrichtung des übertragenen Signals,
- Bewerten (700) der Übertragungsqualität in dem Kommunikationssystem als Funktion des empfangenen Signals.

13. Schätzverfahren nach dem vorhergehenden Anspruch, wobei der Bewertungsschritt einen Schritt des Vergleichens des empfangenen Signals mit einer digitalen Referenzdatei, die mit einer in der Antwortvorrichtung gespeicherten digitalen Datei in Beziehung steht, umfasst.

14. Datenverarbeitungsprogramm, das Befehle für die Ausführung des Signalerzeugungsverfahrens nach Anspruch 8, wenn dieses Programm durch einen Prozessor abgearbeitet wird, umfasst.

15. Datenverarbeitungsprogramm, das Befehle für die Ausführung eines Verfahrens zum Schätzen der Übertragungsqualität in einem Kommunikationssystem nach Anspruch 12, wenn dieses Programm durch einen Prozessor abgearbeitet wird, umfasst.

## Claims

1. Device for generating a signal (1) so as to estimate the transmission quality in a communication system (3), comprising:
- a means of digital storage (10) of at least one digital file,
- a conversion means (11) suitable for, in response to a request (REQ) for a test of quality of the communication system, converting the digital file (NUM1) into an analogue signal (S) to be transmitted through said communication system (3), said conversion being undertaken by applying at least one parameter dependent on at least one parameter specific to the digital file.

2. Device for generating a signal according to Claim 1, in which the conversion means comprises a digital-analogue converter, and is **characterized in that** it comprises a monitoring means suitable for recognizing the sampling frequency of the digital file and for delivering to the digital-analogue converter a clock frequency dependent on said sampling frequency of the digital file.

3. Device for generating a signal according to Claim 1, **characterized in that** it furthermore comprises a processing means suitable for converting the analogue signal into a digital signal to be transmitted through said communication system.

4. Device for generating a signal according to Claim 1, **characterized in that** it comprises an interface suitable for transferring digital files, from an apparatus outside the generating device to the digital storage means.

5. Communication terminal, **characterized in that** it comprises a device (1) for generating a signal so as to estimate the transmission quality in a communication system (3) according to one of the preceding claims.

6. System for estimating the transmission quality of a communication system, comprising:
- a device for generating a signal (1) according to one of Claims 1 to 4,
- a measurement apparatus (2) able to receive a signal (T'), generated by said generating device (1) and travelling through the communication system (3), and to estimate the transmission quality of the communication system (3) as a function of the signal received.

7. System for estimating the transmission quality of a communication system according to the preceding claim, **characterized in that** the measurement apparatus comprises a means for storing a reference digital file, related to the digital file recorded in the storage means of the generating device, as well as an evaluation means suitable for estimating the transmission quality of said communication system as a function of a comparison between the signal received and said reference digital file.

8. Method for generating a signal so as to estimate the quality of transmission of the signal in a communication system, comprising the following steps:
- reception (300) by a responder device of a request for a test of quality of the communication system,
- conversion (400) of at least one digital file stored in said responder device into an analogue signal, in response to the test request, said conversion being undertaken by applying at least one parameter dependent on at least one parameter specific to the digital file.

9. Method for generating a signal according to Claim 8, **characterized in that** it comprises, before the conversion step, a step of detecting the sampling frequency of the digital file stored in the responder device and a step of adjusting the clock frequency, used during the step of converting the digital file, as a function of the sampling frequency detected.

10. Method for generating a signal according to Claim 8, **characterized in that** the step of converting the digital file into an analogue signal is followed by a step of converting the analogue signal into a digital file to be transmitted.

11. Method for generating a signal according to Claim 8 comprising, before the step of receiving the test request, a step of connecting said responder device to an apparatus by way of a dedicated interface, followed by a step of transferring at least one digital file from the apparatus to the responder device.

12. Method for estimating the quality of transmission of a signal in a communication system, according to Claim 8, comprising the following steps:
- transmission (500) of a signal based on said analogue signal, from the responder device to a measurement apparatus, through at least one part of the communication system,
- reception (600), by the measurement apparatus, of the signal transmitted,
- evaluation (700) of the transmission quality in the communication system as a function of the signal received.

13. Estimating method according to the preceding claim, in which the evaluating step comprises a step of comparing the signal received with a reference digital file, related to the digital file stored in the responder device.

14. Computer program comprising instructions for the implementation of the signal generating method according to Claim 8 when this program is executed by a processor.

15. Computer program comprising instructions for the implementation of a method for estimating the transmission quality in a communication system according to Claim 12 when this program is executed by a processor.
